# EUROPEAN PATENT APPLICATION

(11) **EP 3 054 677 A1**
(43) Date of publication of application: **10.08.2016**
(21) Application number: 13894234.7
(22) Date of filing: 30.09.2013
(51) Int. Cl.: H04N 19/00, H04N 19/50

(54) **METHODS AND SYSTEMS FOR IMAGE ENCODING AND DECODING AND TERMINAL**

(71) Applicant: Coolpad Software Tech (Shenzhen) Co., Ltd., Shenzhen, Guangdong 518040 (CN)
(72) Inventor: CAO, Jian, Shenzhen Guangdong 518040 (CN)
(74) Representative: Michalski Hüttermann & Partner Patentanwälte mbB
(86) International application number: PCT/CN2013/084766
(87) International publication number: WO 2015/042976

(57) **Abstract**

The present invention provides an image encoding method, an image decoding method, an image encoding and decoding method and system and a terminal. The image encoding method includes: judging whether at least one frontal face image exists in a face image of a current image frame in a video sequence to be transmitted to a receiving terminal; if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and encoding either half frontal face image in the frontal face image and the difference data in a first encoding mode to obtain frontal face information, and transmitting the frontal face information to the receiving terminal. By adopting the above-mentioned technical solution, the bandwidth occupied by transmission can be further reduced in the image transmission process to improve the experience of users for image transmission, and the image receiving end can restore the original image frame. (Fig. 1)

## Description

### Field of the Invention

The present invention relates to the technical field of image processing, in particular to an image encoding method, an image decoding method, an image encoding and decoding method and system, and a terminal.

### Background of the Invention

A video communication system often needs to encode a video sequence to be transmitted at a sending end to reduce the necessary bandwidth. The occupied bandwidth necessary for video communication is mainly reduced by an encoding method in the following two manners in the prior art:
one encoding method is to encode all parts of an image frame by adopting the same encoding algorithm (e.g., JPEG2000). The amount of information existing after encoding by this encoding method is still very large, and smooth video communication experience still cannot be brought to users.

The other encoding method is to distinguish a face area and a background area in the image frame and adopt different encoding algorithms on the face area and the background area or directly discard background information.

In this encoding method, considering that both communication parties pay more attention to the facial information of the opposite party (compared to the background information), different encoding algorithms are adopted on the face area and the background area or the background information is directly discarded, in order to reduce the amount of information existing after encoding. However, this encoding method still has the following two shortcomings:
1. a receiving end cannot restore the original image frame. This is because the position and the size (e.g., for a rectangular face area, namely length and width) of the face area in the original image frame are not transmitted to the receiving end by a network communication module in this encoding method.
2. All face images are encoded by the same encoding algorithm, and no specific encoding algorithm is specified for the face images. Actually, a face has relatively complicated detail changes, for example, the eyes and the mouth can be opened and can also be closed; there may be a pair of eyeglass worn on the face or not. In addition, the face will change according to an imaging angle, illumination, imaging conditions (e.g., a focal length, an imaging distance or the like of camera equipment) of images and the like. Therefore, if all faces (regardless of the imaging angle and other information thereof) are encoded by the same encoding algorithm, it is not efficient, and the imaging angle and other information of the face are not fully considered, thereby being very difficult to further reduce the amount of information existing after image frame encoding and failing to bring smoother video communication experience to users.

### Summary of the Invention

Based on the above problems, the present invention provides an image processing technology, which can further reduce the bandwidth occupied by transmission in an image transmission process to improve the image transmission experience of users, and can enable an image receiving end to restore the original image frame.

In view of this, the present invention provides an image encoding method, including: step 102, judging whether at least one frontal face image exists in a face image of a current image frame in a video sequence to be transmitted to a receiving terminal; step 104, if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and step 106, encoding either half frontal face image in the frontal face image and the difference data in a first encoding mode to obtain frontal face information, and transmitting the frontal face information to the receiving terminal.

In the technical solution, the image encoding operation can be finished by a sending terminal, the sending terminal serves an image sending and encoding terminal, the receiving terminal serves as an image receiving and decoding terminal, however, those skilled in the art should understand that, the sending terminal can also have the same receiving and decoding functions as the receiving terminal, meanwhile, the receiving terminal can also have the same sending and encoding functions as the sending terminal. Only the condition that the sending terminal serves as the image sending and encoding terminal and the receiving terminal serves as the image receiving and decoding terminal is described below.

The sending terminal and the receiving terminal can be applied to various scenarios, for example, the sending terminal can be a video sender in a video communication process, and then the receiving terminal can be a video receiver in the video communication process. The sending terminal can also be an image collection device in a monitoring system, for example, a camera, and then the receiving terminal can be a display in the monitoring system for receiving an image collected by the camera. When the sending terminal transmits the video sequence (or a picture) to the receiving terminal, the sending terminal judges whether the frontal face image exists in the current image frame, since one half image and the other half image (i.e., a left half face and a right half face) obtained by bisecting the frontal face image along the midperpendicular of the double-eye connecting line are nearly symmetrical, when judging that the frontal face image exists in the current image frame, only one half image of the bisected frontal face image can be obtained, then the difference data of the one half image and the other half image are calculated, and only the one half image and the difference data are encoded (the above-mentioned one half image can be compressed by a compression algorithm, for example, JPEG2000, and then the difference data are compressed), but under normal circumstances, the left half face and the right half face of a person are nearly symmetrically, so the amount of information contained in the difference data is very few (close to 0), accordingly, when transmitting the frontal face image, only the image of one half face and very small difference data can be transmitted, which is equivalent to double the compression rate of the image, and thus a bandwidth occupied by image transmission is reduced to a great extent.

In the above-mentioned technical solution, preferably, the image encoding method further includes: encoding a non-frontal face image in the face image of the current image frame in the first encoding mode to obtain non-frontal face information, encoding a non-face image in the current image frame in a second encoding mode to obtain non-face information, and transmitting the non-frontal face information and the non-face information to the receiving terminal.

In the technical solution, the image quality obtained after encoding in the first encoding mode is better that the image quality obtained after encoding in the second encoding mode, namely, the image quality of the frontal face information and the non-frontal face information (both of which are face information) existing after encoding is better than the quality of the non-face information (e.g., background information). Of course, in the case of poor network conditions (e.g., the bandwidth is very limited), the non-face information can be directly discarded and is not encoded. Therefore, the receiving terminal can restore the frontal face information and the non-frontal face information at a higher restoration degree, and the bandwidth occupied in a transmission process of the non-face information is greatly reduced to reduce the overall bandwidth occupied by image transmission.

In the above-mentioned technical solution, preferably, the image encoding method further includes: marking the frontal face information through a first identifier, marking the non-frontal face information through a second identifier, marking the non-face information through a third identifier, and transmitting the first identifier, the second identifier and the third identifier to the receiving terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in a first decoding mode corresponding to the first encoding mode to obtain one half frontal face image and corresponding difference data, and then calculate the other half frontal face image according to the one half frontal face image and the difference data, for example, the difference data can be a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in a second decoding mode to obtain the non-face image.

In the above-mentioned technical solution, preferably, the image encoding method further includes: encoding the non-frontal face image in the face image in the current image frame and the non-face image in the current image frame in a second encoding mode to obtain secondary information, and transmitting the secondary information to the receiving terminal.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the image encoding method further includes: marking the frontal face information through a first identifier, marking the non-frontal face information and the non-face information through a second identifier, and transmitting the first identifier and the second identifier to the receiving terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

In the above-mentioned technical solution, preferably, the step 106 further includes: when no frontal face image exists in the face image of the current image frame, encoding the face image in a first preset encoding mode to obtain face information, encoding the non-face image in the current image frame in the second encoding mode to obtain the non-face information, and transmitting the face information and the non-face information to the receiving terminal.

In the technical solution, if judging that no frontal face image exists in the current image frame, the sending terminal can judge that the priorities of all the face images (only including non-frontal face images) in the current image frame are higher, and then encode the same in the first encoding mode, so that the receiving terminal can restore the face image at a high restoration degree and restore the non-face information at a lower restoration degree.

In the above-mentioned technical solution, preferably, the image encoding method further includes: marking the face information through a first identifier, marking the non-face information through a second identifier, and transmitting the first identifier and the second identifier to the receiving terminal.

In the technical solution, when receiving the face information and the non-face information, the receiving terminal can differentially process the different information according to the identifiers of the different information.

In the above-mentioned technical solution, preferably, the image encoding method further includes: obtaining size information and position information of the face image in the current image frame, and transmitting the position information and the size information to the receiving terminal.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the image encoding method further includes: judging whether a face image in a next image frame of the current image frame is moved according to a preset mode, if the face image is moved according to the preset mode, generating a corresponding movement instruction according to the preset mode, and transmitting the movement instruction to the receiving terminal, for enabling the receiving terminal to move the face image in the current image frame of the receiving terminal in the preset mode and use the moved current image frame of the receiving terminal as the next image frame of the receiving terminal.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present application further provides an image decoding method, including: step 202, receiving frontal face information from a sending terminal, wherein the frontal face information contains one half frontal face image of each frontal face image in a face image in a current image frame of the sending terminal and difference data of the one half frontal face image and the other half frontal face image; step 204, decoding the frontal face information in a first decoding mode to obtain the one half frontal face image in each frontal face image and the difference data; and step 206, obtaining the other half frontal face image according to the one half frontal face image and the difference data, and obtaining the frontal face image according to the one half frontal face image and the other half frontal face image.

In the technical solution, after receiving the frontal face information sent by the sending terminal, a receiving terminal can decode the frontal face information in the first decoding mode (corresponding to the first encoding mode) to obtain the one half frontal face image of the frontal face image and the difference data in the image frame transmitted by the sending terminal, so as to calculate the other half frontal face image according to the one half frontal face image and the difference data, for example, the difference data are a difference between gray values of pixel points of the one half frontal face image and the other half frontal face image, then the receiving terminal can obtain the other half frontal face image according to the difference between the gray value of the pixel point of the one half frontal face image and the difference data, and finally merge the one half frontal face image with the other half frontal face image to obtain a complete frontal face image. Therefore, the restoration degree of the image frame is guaranteed, and the sending terminal only needs to transmit the data of one half frontal face image and very small difference data, so that the bandwidth occupied in a transmission process of the image frame is reduced.

In the above-mentioned technical solution, preferably, the image decoding method further includes: receiving non-frontal face information and non-face information from the sending terminal, decoding the non-frontal face information in the first decoding mode to obtain a non-frontal face image in the face image of the current image frame, and decoding the non-face information in a second decoding mode to obtain a non-face image in the current image frame.

In the technical solution, after receiving the frontal face information sent by the sending terminal, the receiving terminal can also receive the non-frontal face information and the non-face information from the sending terminal, decode the frontal face information and the non-frontal face information in the first decoding mode and decode the non-face information in the second decoding mode (corresponding to the second encoding mode), wherein the image quality of the frontal face information and the non-frontal face information obtained by the sending terminal in the first encoding mode is higher than the image quality of the non-face information obtained in the second encoding mode, so that the receiving terminal can restore the frontal face image and the non-frontal face image at a higher restoration degree and restore the non-face image at a lower restoration degree.

In the above-mentioned technical solution, preferably, the image decoding method further includes: determining the frontal face information according to a first identifier from the sending terminal, and determining the non-frontal face information and the non-face information according to a second identifier from the sending terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in the first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in the second decoding mode to obtain the non-face image.

In the above-mentioned technical solution, preferably, the image decoding method further includes: receiving the non-frontal face information and the non-face information from the sending terminal, and decoding the non-frontal face information and the non-face information in the second decoding mode to obtain a non-frontal face image in the face image of the current image frame and a non-face image in the current image frame.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the image decoding method further includes: determining the frontal face information according to the first identifier from the sending terminal, and determining the non-frontal face information and the non-face information according to the second identifier from the sending terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

In the above-mentioned technical solution, preferably, the image decoding method further includes: receiving size information and position information of the face image from the sending terminal, and determining the size and the position of the face image in the current image frame according to the size information and the position information.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the image decoding method further includes: receiving a movement instruction from the sending terminal, moving the face image in the current image frame according to a preset mode corresponding to the movement instruction, and using the moved current image frame as the next image frame of the current image frame.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present application further provides an image encoding and decoding method, including any one of the image encoding method and the image decoding method.

The present application further provides a terminal, including: a judging unit, used for judging whether at least one frontal face image exists in a face image of a current image frame in a video sequence to be transmitted to a receiving terminal; a difference calculating unit, used for, if the judging unit judges that at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; an encoding unit, used for encoding either half frontal face image in the frontal face image and the difference data in a first encoding mode to obtain frontal face information; and a transmitting unit, used for transmitting the frontal face information to the receiving terminal.

In the technical solution, the terminal can be a sending terminal used for sending and encoding images (to distinguish with the receiving terminal, the terminal is called the sending terminal below), the receiving terminal serves as an image receiving and decoding terminal, however, those skilled in the art should understand that, the sending terminal can also have the same receiving and decoding functions as the receiving terminal, meanwhile, the receiving terminal can also have the same sending and encoding functions as the sending terminal. Only the condition that the sending terminal serves as the image sending and encoding terminal and the receiving terminal serves as the image receiving and decoding terminal is described below.

The sending terminal and the receiving terminal can be applied to various scenarios, for example, the sending terminal can be a video sender in a video communication process, and then the receiving terminal can be a video receiver in the video communication process. The sending terminal can also be an image collection device in a monitoring system, for example, a camera, and then the receiving terminal can be a display in the monitoring system for receiving an image collected by the camera. When the sending terminal transmits the video sequence (or a picture) to the receiving terminal, the sending terminal judges whether the frontal face image exists in the current image frame, since one half image and the other half image (i.e., a left half face and a right half face) obtained by bisecting the frontal face image along the midperpendicular of the double-eye connecting line are nearly symmetrical, when judging that the frontal face image exists in the current image frame, only one half image of the bisected frontal face image can be obtained, then the difference data of the one half image and the other half image are calculated, and only the one half image and the difference data are encoded (the above-mentioned one half image can be compressed by a compression algorithm, for example, JPEG2000, and then the difference data are compressed), but under normal circumstances, the left half face and the right half face of a person are nearly symmetrically, so the amount of information contained in the difference data is very few (close to 0), accordingly, when transmitting the frontal face image, only the image of one half face and very small difference data can be transmitted, which is equivalent to double the compression rate of the image, and thus a bandwidth occupied by image transmission is reduced to a great extent.

In the above-mentioned technical solution, preferably, the encoding unit is further used for encoding a non-frontal face image in the face image of the current image frame in the first encoding mode to obtain non-frontal face information, and encoding a non-face image in the current image frame in a second encoding mode to obtain non-face information; and the transmitting unit is further used for transmitting the non-frontal face information and the non-face information to the receiving terminal. In the technical solution, the image quality obtained after encoding in the first encoding mode is better that the image quality obtained after encoding in the second encoding mode, namely, the image quality of the frontal face information and the non-frontal face information (both of which are face information) existing after encoding is better than the quality of the non-face information (e.g., background information). Of course, in the case of poor network conditions (e.g., the bandwidth is very limited), the non-face information can be directly discarded and is not encoded. Therefore, the receiving terminal can restore the frontal face information and the non-frontal face information at a higher restoration degree, and the bandwidth occupied in a transmission process of the non-face information is greatly reduced to reduce the overall bandwidth occupied by image transmission.

In the above-mentioned technical solution, preferably, the terminal further includes: a marking unit, used for marking the frontal face information through a first identifier, marking the non-frontal face information through a second identifier and marking the non-face information through a third identifier, wherein the transmitting unit is further used for transmitting the first identifier, the second identifier and the third identifier to the receiving terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in a first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in a second decoding mode to obtain the non-face image.

In the above-mentioned technical solution, preferably, the encoding unit is further used for encoding the non-frontal face image in the face image in the current image frame and the non-face image in the current image frame in a second encoding mode to obtain secondary information; and the transmitting unit is further used for transmitting the secondary information to the receiving terminal.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the terminal further includes: a marking unit, used for marking the frontal face information through a first identifier and marking the non-frontal face information and the non-face information through a second identifier, wherein the transmitting unit is further used for transmitting the first identifier and the second identifier to the receiving terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

In the above-mentioned technical solution, preferably, the encoding unit is further used for, when the judging unit judges that no frontal face image exists in the face image of the current image frame, encoding the face image in a first preset encoding mode to obtain face information, and encoding the non-face image in the current image frame in the second encoding mode to obtain the non-face information; and the transmitting unit is further used for transmitting the face information and the non-face information to the receiving terminal.

In the technical solution, if judging that no frontal face image exists in the current image frame, the sending terminal can judge that the priorities of all the face images (only including non-frontal face images) in the current image frame are higher, and then encode the same in the first encoding mode, so that the receiving terminal can restore the face image at a high restoration degree and restore the non-face information at a lower restoration degree.

In the above-mentioned technical solution, preferably, the terminal further includes: a marking unit, used for marking the face information through a first identifier and marking the non-face information through a second identifier, wherein the transmitting unit is further used for transmitting the first identifier and the second identifier to the receiving terminal.

In the technical solution, when receiving the face information and the non-face information, the receiving terminal can differentially process the different information according to the identifiers of the different information.

In the above-mentioned technical solution, preferably, the terminal further includes: an obtaining unit, used for obtaining size information and position information of the face image in the current image frame, wherein the transmitting unit is further used for transmitting the position information and the size information to the receiving terminal.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the terminal further includes: an instruction generating unit, wherein the judging unit is further used for judging whether a face image in a next image frame of the current image frame is moved according to a preset mode; if the judging unit judges that the face image is moved according to the preset mode, the instruction generating unit generates a corresponding movement instruction according to the preset mode; and the transmitting unit is further used for transmitting the movement instruction to the receiving terminal, for enabling the receiving terminal to move the face image in the current image frame of the receiving terminal in the preset mode and use the moved current image frame of the receiving terminal as the next image frame of the receiving terminal.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present invention further provides a terminal, including: a receiving unit, used for receiving frontal face information from a sending terminal, wherein the frontal face information contains one half frontal face image of each frontal face image in a face image in a current image frame of the sending terminal and difference data of the one half frontal face image and the other half frontal face image; a decoding unit, used for decoding the frontal face information in a first decoding mode to obtain the one half frontal face image in each frontal face image and the difference data; and an image processing unit, used for obtaining the other half frontal face image according to the one half frontal face image and the difference data, and obtaining the frontal face image according to the one half frontal face image and the other half frontal face image.

In the technical solution, the terminal (to distinguish with the sending terminal, the terminal is called a receiving terminal below) can be used for receiving information of the sending terminal and decoding the information to obtain a corresponding image, after receiving the frontal face information sent by the sending terminal, the receiving terminal can decode the frontal face information in the first decoding mode (corresponding to the first encoding mode) to obtain the one half frontal face image of the frontal face image and the difference data in the image frame transmitted by the sending terminal, so as to calculate the other half frontal face image according to the one half frontal face image and the difference data, for example, the difference data are a difference between gray values of pixel points of the one half frontal face image and the other half frontal face image, then the receiving terminal can obtain the other half frontal face image according to the difference between the gray value of the pixel point of the one half frontal face image and the difference data, and finally merge the one half frontal face image with the other half frontal face image to obtain a complete frontal face image. Therefore, the restoration degree of the image frame is guaranteed, and the sending terminal only needs to transmit the data of one half frontal face image and very small difference data, so that the bandwidth occupied in a transmission process of the image frame is reduced.

In the above-mentioned technical solution, preferably, the receiving unit is used for receiving non-frontal face information and non-face information from the sending terminal; and the decoding unit is used for decoding the non-frontal face information in the first decoding mode to obtain a non-frontal face image in the face image of the current image frame, and decoding the non-face information in a second decoding mode to obtain a non-face image in the current image frame.

In the technical solution, after receiving the frontal face information sent by the sending terminal, the receiving terminal can also receive the non-frontal face information and the non-face information from the sending terminal, decode the frontal face information and the non-frontal face information in the first decoding mode and decode the non-face information in the second decoding mode (corresponding to the second encoding mode), wherein the image quality of the frontal face information and the non-frontal face information obtained by the sending terminal in the first encoding mode is higher than the image quality of the non-face information obtained in the second encoding mode, so that the receiving terminal can restore the frontal face image and the non-frontal face image at a higher restoration degree and restore the non-face image at a lower restoration degree.

In the above-mentioned technical solution, preferably, the terminal further includes: an identifier identifying unit, used for determining the frontal face information according to a first identifier from the sending terminal, and determining the non-frontal face information and the non-face information according to a second identifier from the sending terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in the first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in the second decoding mode to obtain the non-face image.

In the above-mentioned technical solution, preferably, the receiving unit is used for receiving the non-frontal face information and the non-face information from the sending terminal; and the decoding unit is used for decoding the non-frontal face information and the non-face information in the second decoding mode to obtain a non-frontal face image in the face image of the current image frame and a non-face image in the current image frame.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the terminal further includes: an identifier identifying unit, used for determining the frontal face information according to the first identifier from the sending terminal, and determining the non-frontal face information and the non-face information according to the second identifier from the sending terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

In the above-mentioned technical solution, preferably, the terminal further includes: a position determining unit, wherein the receiving unit is further used for receiving size information and position information of the face image from the sending terminal, and the position determining unit is used for determining the size and the position of the face image in the current image frame according to the size information and the position information.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the terminal further includes: an image frame determining unit, wherein the receiving unit is further used for receiving a movement instruction from the sending terminal, and the image frame determining unit is used for moving the face image in the current image frame according to a preset mode corresponding to the movement instruction, and using the moved current image frame as the next image frame of the current image frame.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present application further provides an image encoding and decoding system, including any one of the two terminals.

According to the implementations of the present invention, a program product stored on a non-volatile machine readable medium is further provided for image encoding, wherein the program product includes a machine executable instruction used for driving a computer system to execute the following steps: judging whether at least one frontal face image exists in a face image of a current image frame in a video sequence to be transmitted to a receiving terminal; if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and encoding either half frontal face image in the frontal face image and the difference data in a first encoding mode to obtain frontal face information, and transmitting the frontal face information to the receiving terminal.

According to the implementations of the present invention, a program product stored on a non-volatile machine readable medium is further provided for image decoding, wherein the program product includes a machine executable instruction used for driving a computer system to execute the following steps: receiving frontal face information from a sending terminal, wherein the frontal face information contains one half frontal face image of each frontal face image in a face image in a current image frame of the sending terminal and difference data of the one half frontal face image and the other half frontal face image; decoding the frontal face information in a first decoding mode to obtain the one half frontal face image in each frontal face image and the difference data; and obtaining the other half frontal face image according to the one half frontal face image and the difference data, and obtaining the frontal face image according to the one half frontal face image and the other half frontal face image.

According to the implementations of the present invention, a program product stored on a non-volatile machine readable medium is further provided for image encoding and decoding, including the above-mentioned two program products.

According to the implementations of the present invention, a non-volatile machine readable medium is further provided, wherein a program product for image encoding is stored in the non-volatile machine readable medium, and the program product includes a machine executable instruction used for driving a computer system to execute the following steps: judging whether at least one frontal face image exists in a face image of a current image frame in a video sequence to be transmitted to a receiving terminal; if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and encoding either half frontal face image in the frontal face image and the difference data in a first encoding mode to obtain frontal face information, and transmitting the frontal face information to the receiving terminal. According to the implementations of the present invention, a non-volatile machine readable medium is further provided, wherein a program product for image decoding is stored in the non-volatile machine readable medium, and the program product includes a machine executable instruction used for driving a computer system to execute the following steps: receiving frontal face information from a sending terminal, wherein the frontal face information contains one half frontal face image of each frontal face image in a face image in a current image frame of the sending terminal and difference data of the one half frontal face image and the other half frontal face image; decoding the frontal face information in a first decoding mode to obtain the one half frontal face image in each frontal face image and the difference data; and obtaining the other half frontal face image according to the one half frontal face image and the difference data, and obtaining the frontal face image according to the one half frontal face image and the other half frontal face image.

According to the implementations of the present invention, a non-volatile machine readable medium is further provided, wherein a program product for image encoding and decoding is stored in the non-volatile machine readable medium, and the program product includes above-mentioned two program products.

According to the implementations of the present invention, a machine readable program is further provided, and the program drives a machine to execute any image encoding and decoding method in the above-mentioned technical solution. According to the implementations of the present invention, a storage medium storing a machine readable program is further provided, wherein the machine readable program drives a machine to execute any image encoding and decoding method in the above-mentioned technical solution.

By adopting the above-mentioned technical solution, the bandwidth occupied by transmission can be further reduced in the image transmission process to improve the experience of users for image transmission, and the image receiving end can restore the original image frame.

### Brief Description of the Drawings

Fig.1 shows a schematic flowchart of an image encoding method according to an embodiment of the present invention;
Fig.2 shows a schematic flowchart of an image decoding method according to an embodiment of the present invention;
Fig.3 shows a schematic block diagram of a terminal according to an embodiment of the present invention;
Fig.4 shows a schematic block diagram of a terminal according to another embodiment of the present invention;
Fig.5 shows a specific schematic flowchart of an image encoding method according to an embodiment of the present invention;
Fig.6 shows a specific schematic flowchart of an image decoding method according to an embodiment of the present invention.

### Detailed Description of the Embodiments

In order that the above purposes, features and advantages of the present invention can be understood more clearly, the present invention will be further described below in detail in combination with the accompany drawings and specific implementations. It should be noted that, on the condition of generating no conflict, the embodiments of the present application and the features in the embodiments can be mutually combined.

A lot of specific details are described in the description below to fully understand the present invention, but the present invention can also be implemented in other manners different from what is described herein, and thus the protection scope of the present invention is not limited to the specific embodiments disclosed below.

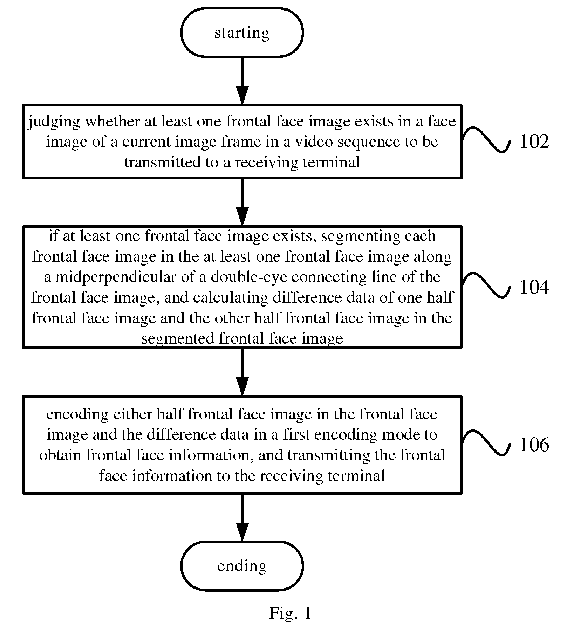

Fig.1 shows a schematic flowchart of an image encoding method according to an embodiment of the present invention.

As shown in Fig.1, the image encoding method according to the embodiment of the present invention includes: step 102, judging whether at least one frontal face image exists in a face image of a current image frame in a video sequence to be transmitted to a receiving terminal; step 104, if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and step 106, encoding either half frontal face image in the frontal face image and the difference data in a first encoding mode to obtain frontal face information, and transmitting the frontal face information to the receiving terminal.

In the technical solution, the image encoding operation can be finished by a sending terminal, the sending terminal serves an image sending and encoding terminal, the receiving terminal serves as an image receiving and decoding terminal, however, those skilled in the art should understand that, the sending terminal can also have the same receiving and decoding functions as the receiving terminal, meanwhile, the receiving terminal can also have the same sending and encoding functions as the sending terminal. Only the condition that the sending terminal serves as the image sending and encoding terminal and the receiving terminal serves as the image receiving and decoding terminal is described below.

The sending terminal and the receiving terminal can be applied to various scenarios, for example, the sending terminal can be a video sender in a video communication process, and then the receiving terminal can be a video receiver in the video communication process. The sending terminal can also be an image collection device in a monitoring system, for example, a camera, and then the receiving terminal can be a display in the monitoring system for receiving an image collected by the camera. When the sending terminal transmits the video sequence (or a picture) to the receiving terminal, the sending terminal judges whether the frontal face image exists in the current image frame, since one half image and the other half image (i.e., a left half face and a right half face) obtained by bisecting the frontal face image along the midperpendicular of the double-eye connecting line are nearly symmetrical, when judging that the frontal face image exists in the current image frame, only one half image of the bisected frontal face image can be obtained, then the difference data of the one half image and the other half image are calculated, and only the one half image and the difference data are encoded (the above-mentioned one half image can be compressed by a compression algorithm, for example, JPEG2000, and then the difference data are compressed), but under normal circumstances, the left half face and the right half face of a person are nearly symmetrically, so the amount of information contained in the difference data is very few (close to 0), accordingly, when transmitting the frontal face image, only the image of one half face and very small difference data can be transmitted, which is equivalent to double the compression rate of the image, and thus a bandwidth occupied by image transmission is reduced to a great extent.

In the above-mentioned technical solution, preferably, the image encoding method further includes: encoding a non-frontal face image in the face image of the current image frame in the first encoding mode to obtain non-frontal face information, encoding a non-face image in the current image frame in a second encoding mode to obtain non-face information, and transmitting the non-frontal face information and the non-face information to the receiving terminal.

In the technical solution, the image quality obtained after encoding in the first encoding mode is better that the image quality obtained after encoding in the second encoding mode, namely, the image quality of the encoded frontal face information and the non-frontal face information (both of which are face information) existing after encoding is better than the quality of the non-face information (e.g., background information). Of course, in the case of poor network conditions (e.g., the bandwidth is very limited), the non-face information can be directly discarded and is not encoded. Therefore, the receiving terminal can restore the frontal face information and the non-frontal face information at a higher restoration degree, and the bandwidth occupied in a transmission process of the non-face information is greatly reduced to reduce the overall bandwidth occupied by image transmission.

In the above-mentioned technical solution, preferably, the image encoding method further includes: marking the frontal face information through a first identifier, marking the non-frontal face information through a second identifier, marking the non-face information through a third identifier, and transmitting the first identifier, the second identifier and the third identifier to the receiving terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in a first decoding mode corresponding to the first encoding mode to obtain one half frontal face image and corresponding difference data, and then calculate the other half frontal face image according to the one half frontal face image and the difference data, for example, the difference data can be a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in a second decoding mode to obtain the non-face image.

In the above-mentioned technical solution, preferably, the image encoding method further includes: encoding the non-frontal face image in the face image in the current image frame and the non-face image in the current image frame in a second encoding mode to obtain secondary information, and transmitting the secondary information to the receiving terminal.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the image encoding method further includes: marking the frontal face information through a first identifier, marking the non-frontal face information and the non-face information through a second identifier, and transmitting the first identifier and the second identifier to the receiving terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

In the above-mentioned technical solution, preferably, the step 106 further includes: when no frontal face image exists in the face image of the current image frame, encoding the face image in a first preset encoding mode to obtain face information, encoding the non-face image in the current image frame in the second encoding mode to obtain the non-face information, and transmitting the face information and the non-face information to the receiving terminal.

In the technical solution, if judging that no frontal face image exists in the current image frame, the sending terminal can judge that the priorities of all the face images (only including non-frontal face images) in the current image frame are higher, and then encode the same in the first encoding mode, so that the receiving terminal can restore the face image at a high restoration degree and restore the non-face information at a lower restoration degree.

In the above-mentioned technical solution, preferably, the image encoding method further includes: marking the face information through a first identifier, marking the non-face information through a second identifier, and transmitting the first identifier and the second identifier to the receiving terminal.

In the technical solution, when receiving the face information and the non-face information, the receiving terminal can differentially process the different information according to the identifiers of the different information. Wherein, the identifier can be a 01 bit sequence, for example, a frontal face is marked by 00, a non-frontal face is marked by 01, and a non-face is marked by 10.

In the above-mentioned technical solution, preferably, the image encoding method further includes: obtaining size information and position information of the face image in the current image frame, and transmitting the position information and the size information to the receiving terminal.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the image encoding method further includes: judging whether a face image in a next image frame of the current image frame is moved according to a preset mode, if the face image is moved according to the preset mode, generating a corresponding movement instruction according to the preset mode, and transmitting the movement instruction to the receiving terminal, for enabling the receiving terminal to move the face image in the current image frame of the receiving terminal in the preset mode and use the moved current image frame of the receiving terminal as the next image frame of the receiving terminal.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

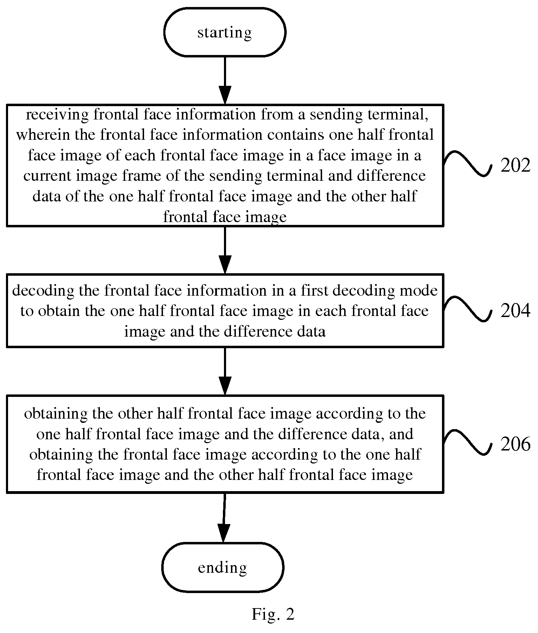

Fig.2 shows a schematic flowchart of an image decoding method according to an embodiment of the present invention.

As shown in Fig.2, the image decoding method according to the embodiment of the present invention includes: step 202, receiving frontal face information from a sending terminal, wherein the frontal face information contains one half frontal face image of each frontal face image in a face image in a current image frame of the sending terminal and difference data of the one half frontal face image and the other half frontal face image; step 204, decoding the frontal face information in a first decoding mode to obtain the one half frontal face image in each frontal face image and the difference data; and step 206, obtaining the other half frontal face image according to the one half frontal face image and the difference data, and obtaining the frontal face image according to the one half frontal face image and the other half frontal face image.

In the technical solution, after receiving the frontal face information sent by the sending terminal, a receiving terminal can decode the frontal face information in the first decoding mode (corresponding to the first encoding mode) to obtain the one half frontal face image of the frontal face image and the difference data in the image frame transmitted by the sending terminal, so as to calculate the other half frontal face image according to the one half frontal face image and the difference data, for example, the difference data are a difference between gray values of pixel points of the one half frontal face image and the other half frontal face image, then the receiving terminal can obtain the other half frontal face image according to the difference between the gray value of the pixel point of the one half frontal face image and the difference data, and finally merge the one half frontal face image with the other half frontal face image to obtain a complete frontal face image. Therefore, the restoration degree of the image frame is guaranteed, and the sending terminal only needs to transmit the data of one half frontal face image and very small difference data, so that the bandwidth occupied in a transmission process of the image frame is reduced.

In the above-mentioned technical solution, preferably, the image decoding method further includes: receiving non-frontal face information and non-face information from the sending terminal, decoding the non-frontal face information in the first decoding mode to obtain a non-frontal face image in the face image of the current image frame, and decoding the non-face information in a second decoding mode to obtain a non-face image in the current image frame.

In the technical solution, after receiving the frontal face information sent by the sending terminal, the receiving terminal can also receive the non-frontal face information and the non-face information from the sending terminal, decode the frontal face information and the non-frontal face information in the first decoding mode and decode the non-face information in the second decoding mode (corresponding to the second encoding mode), wherein the image quality of the frontal face information and the non-frontal face information obtained by the sending terminal in the first encoding mode is higher than the image quality of the non-face information obtained in the second encoding mode, so that the receiving terminal can restore the frontal face image and the non-frontal face image at a higher restoration degree and restore the non-face image at a lower restoration degree.

In the above-mentioned technical solution, preferably, the image decoding method further includes: determining the frontal face information according to a first identifier from the sending terminal, and determining the non-frontal face information and the non-face information according to a second identifier from the sending terminal.

In the technical solution, when receiving the frontal face information, the non-frontal face information and the non-face information, the receiving terminal can differentially process the different information according to the identifiers of the different information. For example, the receiving terminal can identify the frontal face information according to the first identifier, decode the frontal face information in the first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in the second decoding mode to obtain the non-face image.

In the above-mentioned technical solution, preferably, the image decoding method further includes: receiving the non-frontal face information and the non-face information from the sending terminal, and decoding the non-frontal face information and the non-face information in the second decoding mode to obtain a non-frontal face image in the face image of the current image frame and a non-face image in the current image frame.

In the technical solution, the sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

In the above-mentioned technical solution, preferably, the image decoding method further includes: determining the frontal face information according to the first identifier from the sending terminal, and determining the non-frontal face information and the non-face information according to the second identifier from the sending terminal.

In the technical solution, when receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image. Wherein, the identifier can be a 01 bit sequence, for example, a frontal face is marked by 00, a non-frontal face is marked by 01, and a non-face is marked by 10.

In the above-mentioned technical solution, preferably, the image decoding method further includes: receiving size information and position information of the face image from the sending terminal, and determining the size and the position of the face image in the current image frame according to the size information and the position information.

In the technical solution, the sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

In the above-mentioned technical solution, preferably, the image decoding method further includes: receiving a movement instruction from the sending terminal, moving the face image in the current image frame according to a preset mode corresponding to the movement instruction, and using the moved current image frame as the next image frame of the current image frame.

In the technical solution, if the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present application further provides an image encoding and decoding method, including any one of the image encoding method and the image decoding method.

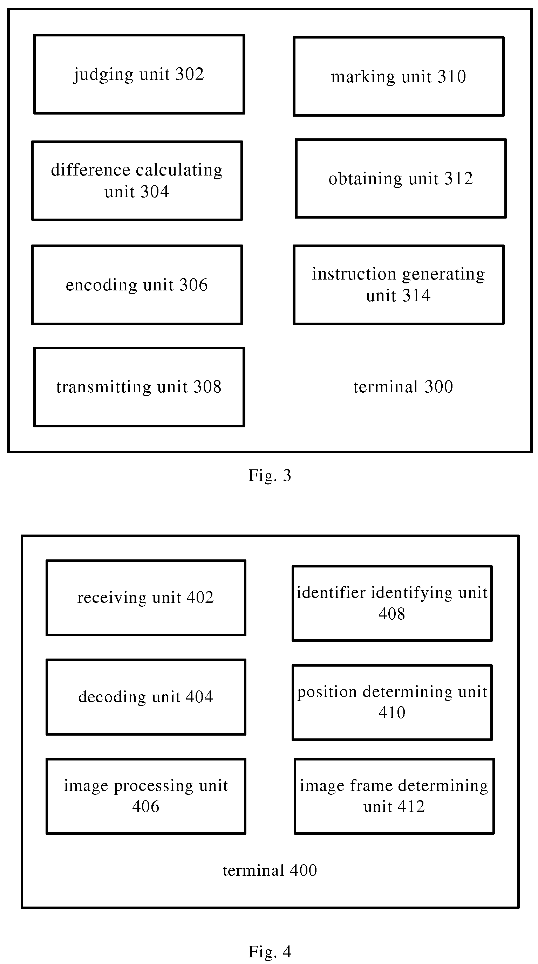

Fig.3 shows a schematic block diagram of a terminal according to an embodiment of the present invention.

As shown in Fig.3, the terminal 300 according to an embodiment of the present invention includes: a judging unit 302, used for judging whether at least one frontal face image exists in a face image of a current image frame in a video sequence to be transmitted to a receiving terminal; a difference calculating unit 304, used for, if the judging unit 302 judges that at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; an encoding unit 306, used for encoding either half frontal face image in the frontal face image and the difference data in a first encoding mode to obtain frontal face information; and a transmitting unit 308, used for transmitting the frontal face information to the receiving terminal.

The terminal 300 can be a sending terminal used for sending and encoding images (to distinguish with the receiving terminal, the terminal 300 is called the sending terminal below), the receiving terminal serves as an image receiving and decoding terminal, however, those skilled in the art should understand that, the sending terminal can also have the same receiving and decoding functions as the receiving terminal, meanwhile, the receiving terminal can also have the same sending and encoding functions as the sending terminal. Only the condition that the sending terminal serves as the image sending and encoding terminal and the receiving terminal serves as the image receiving and decoding terminal is described below.

The sending terminal and the receiving terminal can be applied to various scenarios, for example, the sending terminal can be a video sender in a video communication process, and then the receiving terminal can be a video receiver in the video communication process. The sending terminal can also be an image collection device in a monitoring system, for example, a camera, and then the receiving terminal can be a display in the monitoring system for receiving an image collected by the camera. When the sending terminal transmits the video sequence (or a picture) to the receiving terminal, the sending terminal judges whether the frontal face image exists in the current image frame, since one half image and the other half image (i.e., a left half face and a right half face) obtained by bisecting the frontal face image along the midperpendicular of the double-eye connecting line are nearly symmetrical, when judging that the frontal face image exists in the current image frame, only one half image of the bisected frontal face image can be obtained, then the difference data of the one half image and the other half image are calculated, and only the one half image and the difference data are encoded (the above-mentioned one half image can be compressed by a compression algorithm, for example, JPEG2000, and then the difference data are compressed), but under normal circumstances, the left half face and the right half face of a person are nearly symmetrically, so the amount of information contained in the difference data is very few (close to 0), accordingly, when transmitting the frontal face image, only the image of one half face and very small difference data can be transmitted, which is equivalent to double the compression rate of the image, and thus a bandwidth occupied by image transmission is reduced to a great extent.

Preferably, the encoding unit 306 is further used for encoding a non-frontal face image in the face image of the current image frame in the first encoding mode to obtain non-frontal face information, and encoding a non-face image in the current image frame in a second encoding mode to obtain non-face information; and the transmitting unit 308 is further used for transmitting the non-frontal face information and the non-face information to the receiving terminal.

The image quality obtained after encoding in the first encoding mode is better that the image quality obtained after encoding in the second encoding mode, namely, the image quality of the frontal face information and the non-frontal face information (both of which are face information) existing after encoding is better than the quality of the non-face information (e.g., background information). Of course, in the case of poor network conditions (e.g., the bandwidth is very limited), the non-face information can be directly discarded and is not encoded. Therefore, the receiving terminal can restore the frontal face information and the non-frontal face information at a higher restoration degree, and the bandwidth occupied in a transmission process of the non-face information is greatly reduced to reduce the overall bandwidth occupied by image transmission.

Preferably, the terminal further includes: a marking unit 310, used for marking the frontal face information through a first identifier, marking the non-frontal face information through a second identifier and marking the non-face information through a third identifier, wherein the transmitting unit 308 is further used for transmitting the first identifier, the second identifier and the third identifier to the receiving terminal. When receiving the frontal face information, the non-frontal face information and the non-face information, the receiving terminal can differentially process the different information according to the identifiers of the different information. For example, the receiving terminal can identify the frontal face information according to the first identifier, decode the frontal face information in a first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in a second decoding mode to obtain the non-face image.

Preferably, the encoding unit 306 is further used for encoding the non-frontal face image in the face image in the current image frame and the non-face image in the current image frame in a second encoding mode to obtain secondary information; and the transmitting unit 308 is further used for transmitting the secondary information to the receiving terminal.

The sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

Preferably, the terminal further includes: a marking unit 310, used for marking the frontal face information through a first identifier and marking the non-frontal face information and the non-face information through a second identifier, wherein the transmitting unit 308 is further used for transmitting the first identifier and the second identifier to the receiving terminal.

When receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image.

Preferably, the encoding unit 306 is further used for, when the judging unit 302 judges that no frontal face image exists in the face image of the current image frame, encoding the face image in a first preset encoding mode to obtain face information, and encoding the non-face image in the current image frame in the second encoding mode to obtain the non-face information; and the transmitting unit 308 is further used for transmitting the face information and the non-face information to the receiving terminal.

If judging that no frontal face image exists in the current image frame, the sending terminal can judge that the priorities of all the face images (only including non-frontal face images) in the current image frame are higher, and then encode the same in the first encoding mode, so that the receiving terminal can restore the face image at a high restoration degree and restore the non-face information at a lower restoration degree. Preferably, the terminal further includes: a marking unit 310, used for marking the face information through a first identifier and marking the non-face information through a second identifier, wherein the transmitting unit 308 is further used for transmitting the first identifier and the second identifier to the receiving terminal. When receiving the face information and the non-face information, the receiving terminal can differentially process the different information according to the identifiers of the different information. Wherein, the identifier can be a 01 bit sequence, for example, a frontal face is marked by 00, a non-frontal face is marked by 01, and a non-face is marked by 10.

Preferably, the terminal further includes: an obtaining unit 312, used for obtaining size information and position information of the face image in the current image frame, wherein the transmitting unit 308 is further used for transmitting the position information and the size information to the receiving terminal.

The sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

Preferably, the terminal further includes: an instruction generating unit 314, wherein the judging unit 302 is further used for judging whether a face image in a next image frame of the current image frame is moved according to a preset mode; if the judging unit judges that the face image is moved according to the preset mode, the instruction generating unit generates a corresponding movement instruction according to the preset mode; and the transmitting unit 308 is further used for transmitting the movement instruction to the receiving terminal, for enabling the receiving terminal to move the face image in the current image frame of the receiving terminal in the preset mode and use the moved current image frame of the receiving terminal as the next image frame of the receiving terminal.

If the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

Fig.4 shows a schematic block diagram of a terminal according to another embodiment of the present invention.

As shown in Fig.4, the terminal 400 according to the other embodiment of the present invention includes: a receiving unit 402, used for receiving frontal face information from a sending terminal, wherein the frontal face information contains one half frontal face image of each frontal face image in a face image in a current image frame of the sending terminal and difference data of the one half frontal face image and the other half frontal face image; a decoding unit 404, used for decoding the frontal face information in a first decoding mode to obtain the one half frontal face image in each frontal face image and the difference data; and an image processing unit 406, used for obtaining the other half frontal face image according to the one half frontal face image and the difference data, and obtaining the frontal face image according to the one half frontal face image and the other half frontal face image.

The terminal 400 (to distinguish with the sending terminal, the terminal 400 is called a receiving terminal below) can be used for receiving information of the sending terminal and decoding the information to obtain a corresponding image, after receiving the frontal face information sent by the sending terminal, the receiving terminal can decode the frontal face information in the first decoding mode (corresponding to the first encoding mode) to obtain the one half frontal face image of the frontal face image and the difference data in the image frame transmitted by the sending terminal, so as to calculate the other half frontal face image according to the one half frontal face image and the difference data, for example, the difference data are a difference between gray values of pixel points of the one half frontal face image and the other half frontal face image, then the receiving terminal can obtain the other half frontal face image according to the difference between the gray value of the pixel point of the one half frontal face image and the difference data, and finally merge the one half frontal face image with the other half frontal face image to obtain a complete frontal face image. Therefore, the restoration degree of the image frame is guaranteed, and the sending terminal only needs to transmit the data of one half frontal face image and very small difference data, so that the bandwidth occupied in a transmission process of the image frame is reduced.

Preferably, the receiving unit 402 is used for receiving non-frontal face information and non-face information from the sending terminal; and the decoding unit 404 is used for decoding the non-frontal face information in the first decoding mode to obtain a non-frontal face image in the face image of the current image frame, and decoding the non-face information in a second decoding mode to obtain a non-face image in the current image frame.

After receiving the frontal face information sent by the sending terminal, the receiving terminal can also receive the non-frontal face information and the non-face information from the sending terminal, decode the frontal face information and the non-frontal face information in the first decoding mode and decode the non-face information in the second decoding mode (corresponding to the second encoding mode), wherein the image quality of the frontal face information and the non-frontal face information obtained by the sending terminal in the first encoding mode is higher than the image quality of the non-face information obtained in the second encoding mode, so that the receiving terminal can restore the frontal face image and the non-frontal face image at a higher restoration degree and restore the non-face image at a lower restoration degree.

Preferably, the terminal further includes: an identifier identifying unit 408, used for determining the frontal face information according to a first identifier from the sending terminal, and determining the non-frontal face information and the non-face information according to a second identifier from the sending terminal.

When receiving the frontal face information, the non-frontal face information and the non-face information, the receiving terminal can differentially process the different information according to the identifiers of the different information. For example, the receiving terminal can identify the frontal face information according to the first identifier, decode the frontal face information in the first decoding mode corresponding to the first encoding mode to obtain one half frontal face image and corresponding difference data, and then calculate the other half frontal face image according to the one half frontal face image and the difference data, for example, the difference data are a gray value of a pixel point, and in this way, the receiving terminal can calculate the other half frontal face image according to a difference between the gray value of the pixel point of the one half frontal face image and the difference data. Similarly, the receiving terminal can also identify the non-frontal face information according to the second identifier, decode the non-frontal face information in the first decoding mode to obtain the non-frontal face image, identify the non-face information according to the third identifier and decode the non-face information in the second decoding mode to obtain the non-face image.

Preferably, the receiving unit 402 is used for receiving the non-frontal face information and the non-face information from the sending terminal; and the decoding unit 404 is used for decoding the non-frontal face information and the non-face information in the second decoding mode to obtain a non-frontal face image in the face image of the current image frame and a non-face image in the current image frame.

The sending terminal can also only encode the frontal face image in the first encoding mode according to user settings, and then encode the non-frontal face image and the non-face image in the second encoding mode (which is equivalent to that the priority of the frontal face image is higher than the priorities of the non-frontal face image and the non-face image), so that the receiving terminal can restore the frontal face image at a higher restoration degree and restore the non-frontal face image and the non-face image at a lower restoration degree.

Preferably, the terminal further includes: an identifier identifying unit 408, used for determining the frontal face information according to the first identifier from the sending terminal, and determining the non-frontal face information and the non-face information according to the second identifier from the sending terminal.

When receiving the frontal face information, the non-frontal face information and the non-face information, the receiving terminal can differentially process the different information according to the identifiers of the different information. For example, the receiving terminal decodes the frontal face information in the first decoding mode to obtain one half frontal face image and corresponding difference data, calculates the other half frontal face image according to the one half frontal face image and the difference data, and then decodes the non-frontal face information and the non-face information in the second decoding mode to obtain the non-frontal face image and the non-face image. Wherein, the identifier can be a 01 bit sequence, for example, a frontal face is marked by 00, a non-frontal face is marked by 01, and a non-face is marked by 10.

Preferably, the terminal further includes: a position determining unit 410, wherein the receiving unit 402 is further used for receiving size information and position information of the face image from the sending terminal, and the position determining unit 410 is used for determining the size and the position of the face image in the current image frame according to the size information and the position information. The sending terminal can also obtain the size information and the position information of the face image in the current image frame, so as to send the size information and the position information of the face image to the receiving terminal when sending the encoded image to the receiving terminal, so that the receiving terminal can accurately determine the size and the position of the face image in the current image frame according to the received size information and position information, in order to accurately restore the original image frame sent by the sending terminal.

Preferably, the terminal further includes: an image frame determining unit 412, wherein the receiving unit 402 is further used for receiving a movement instruction from the sending terminal, and the image frame determining unit 412 is used for moving the face image in the current image frame according to a preset mode corresponding to the movement instruction, and using the moved current image frame as the next image frame of the current image frame.

If the face image in the next image frame of the current image frame is only moved according to the preset mode relative to the face image in the current image frame, for example, in a video communication process, a head portrait of a user of a video sending end only horizontally moves (e.g., horizontally approaching to the camera, or horizontally departing from the camera), or moves in a vertical direction or rotates in an original vertical plane, then the sending terminal can generate a corresponding instruction for each moving mode, for example, can generate a horizontal movement instruction for horizontal movement, so that the face image in the receiving terminal generates corresponding horizontal movement, and the sending terminal does not need to transmit the next image frame to the receiving terminal, so that the data transmission quantity is effectively reduced on the condition of generating no influence on user experience.

The present application further provides an image encoding and decoding system, including the terminal 300 as shown in Fig.3 and the terminal 400 as shown in Fig.4.

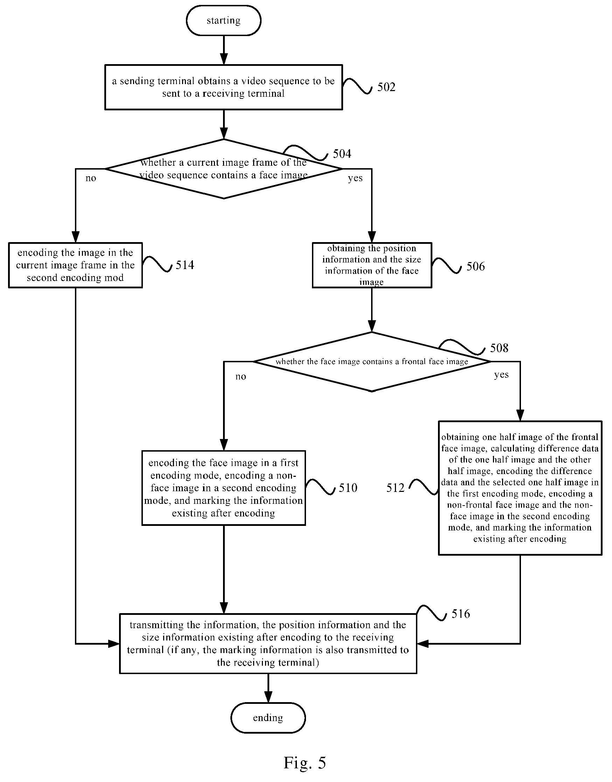

Fig.5 shows a specific schematic flowchart of an image encoding method according to an embodiment of the present invention.

As shown in Fig.5, the image encoding method according to the embodiment of the present invention specifically includes:
step 502, a sending terminal (which can be the terminal 300 as shown in Fig.3) obtains a video sequence to be sent to a receiving terminal (which can be the terminal 400 as shown in Fig.4).
Step 504, the sending terminal judges whether a current image frame of the video sequence contains a face image, if the face image exists, step 506 is turned to, and if no face image exists, step 514 is turned to.
Step 506, if the face image exists, the position information (e.g., coordinates) and the size information (e.g., length, width values) of the face image in the current image frame are obtained, a data volume occupied by the position information and the size information is very small, and by transmitting information in a very small data volume, the receiving terminal can restore the original image frame at a higher restoration degree.
Step 508, whether the face image contains a frontal face image is judged, specifically, a corresponding face portion can be intercepted from a face image to be identified in a self-adapting manner according to the horizontal distance of double eyes, then a mirror image face corresponding to the face portion is generated according to the intercepted face portion, difference information of the two images is calculated according to gray values corresponding to gray values of pixel points of the face portion and the mirror image face, and the calculated difference information is compared with a preset threshold to judge whether the face contained in the face image to be identified is a frontal face.
Step 510, if no frontal face image exists in the face image (i.e., the face images are non-frontal face images, which can be specifically side face images or frontal face images, but there is a great difference between the left half face and the right half face), then the face image is encoded in a first encoding mode, and the non-frontal face image is encoded in a second encoding mode, and the information existing after encoding is marked.
Step 512, if the frontal face image exists, one half image of the frontal face image is obtained (specifically, the image can be segmented along a midperpendicular of a double-eye connecting line of the face image, and one of the two images formed by segmenting is selected), difference data of one half frontal face image and the other half frontal face image are calculated, the difference data and the selected one half image are encoded in the first encoding mode, the non-frontal face image and the non-face image are encoded in the second encoding mode, and the information existing after encoding is marked.
Step 514, if no face image exists in the current image frame (indicating that all the images are background images), then the images in the current image frame are encoded in the second encoding mode.
Step 516, the sending terminal transmits the information, the position information and the size information existing after encoding to the receiving terminal (if any, the marking information is also transmitted to the receiving terminal).

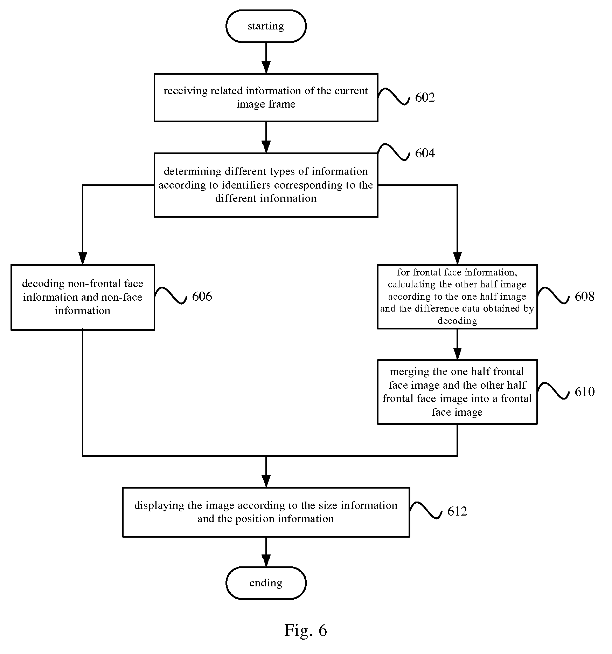

Fig.6 shows a specific schematic flowchart of an image decoding method according to an embodiment of the present invention.

As shown in Fig.6, the image decoding method according to the embodiment of the present invention specifically includes:
step 602, a receiving terminal receives related information, namely image information existing after encoding, of a current image frame sent by a sending terminal.
Step 604, different types of information are determined according to identifiers corresponding to the different information, for example, information corresponding to an identifier 00 is frontal face information.
Step 606, non-frontal face information and non-face information are decoded in a decoding mode corresponding to the encoding mode thereof.
Step 608, the frontal face information is decoded in a corresponding decoding mode to obtain one half frontal face image and difference data, and the other half frontal face image is calculated according to the one half frontal face image and the difference data.
Step 610, the one half frontal face image and the other half frontal face image are merged into a frontal face image.
Step 612, the frontal face image, a non-frontal face image and a non-face image are displayed according to the size information and the position information to restore the current image frame.

According to the implementations of the present invention, a program product stored on a non-volatile machine readable medium is further provided for image encoding, wherein the program product includes a machine executable instruction used for driving a computer system to execute the following steps: judging whether at least one frontal face image exists in a face image of a current image frame in a video sequence to be transmitted to a receiving terminal; if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and encoding either half frontal face image in the frontal face image and the difference data in a first encoding mode to obtain frontal face information, and transmitting the frontal face information to the receiving terminal.

According to the implementations of the present invention, a program product stored on a non-volatile machine readable medium is further provided for image decoding, wherein the program product includes a machine executable instruction used for driving a computer system to execute the following steps: receiving frontal face information from a sending terminal, wherein the frontal face information contains one half frontal face image of each frontal face image in a face image in a current image frame of the sending terminal and difference data of the one half frontal face image and the other half frontal face image; decoding the frontal face information in a first decoding mode to obtain the one half frontal face image in each frontal face image and the difference data; and obtaining the other half frontal face image according to the one half frontal face image and the difference data, and obtaining the frontal face image according to the one half frontal face image and the other half frontal face image.

According to the implementations of the present invention, a program product stored on a non-volatile machine readable medium is further provided for image encoding and decoding, including the above-mentioned two program products.

According to the implementations of the present invention, a non-volatile machine readable medium is further provided, wherein a program product for image encoding is stored in the non-volatile machine readable medium, and the program product includes a machine executable instruction used for driving a computer system to execute the following steps: judging whether at least one frontal face image exists in a face image of a current image frame in a video sequence to be transmitted to a receiving terminal; if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and encoding either half frontal face image in the frontal face image and the difference data in a first encoding mode to obtain frontal face information, and transmitting the frontal face information to the receiving terminal.

According to the implementations of the present invention, a non-volatile machine readable medium is further provided, wherein a program product for image decoding is stored in the non-volatile machine readable medium, and the program product includes a machine executable instruction used for driving a computer system to execute the following steps: receiving frontal face information from a sending terminal, wherein the frontal face information contains one half frontal face image of each frontal face image in a face image in a current image frame of the sending terminal and difference data of the one half frontal face image and the other half frontal face image; decoding the frontal face information in a first decoding mode to obtain the one half frontal face image in each frontal face image and the difference data; and obtaining the other half frontal face image according to the one half frontal face image and the difference data, and obtaining the frontal face image according to the one half frontal face image and the other half frontal face image.

According to the implementations of the present invention, a non-volatile machine readable medium is further provided, wherein a program product for image encoding and decoding is stored in the non-volatile machine readable medium, and the program product includes above-mentioned two program products.

According to the implementations of the present invention, a machine readable program is further provided, and the program drives a machine to execute any image encoding and decoding method in the above-mentioned technical solution.

According to the implementations of the present invention, a storage medium storing a machine readable program is further provided, wherein the machine readable program drives a machine to execute any image encoding and decoding method in the above-mentioned technical solution.

The technical solutions of the present invention have been described above in detail in combination with the accompany drawings, considering that in related technology, a face imaging angle and other information are not fully considered in the image encoding mode, so that the amount of information existing after image frame encoding is difficult to further reduce, and the original image frame cannot be restored. By adopting the technical solutions of the present application, the bandwidth occupied by transmission can be further reduced in the image transmission process to improve the experience of users for image transmission, and the image receiving end can restore the original image frame.

In the present invention, the terms "first", "second" and "third" are merely used for descriptive purposes and cannot be understood as indication or implication of relative importance. The term "multiple" refers to two or more, unless otherwise expressly limited.

The foregoing descriptions are merely preferred embodiments of the present invention, rather than limiting the present invention. Those skilled in the art can make a variety of modifications and variations. Any modifications, equivalent substitutions, improvements or the like made within the spirit and principle of the present invention shall fall within the protection scope of the present invention.

## Claims

1. An image encoding method, comprising:
step 102, judging whether at least one frontal face image exists in a face image of a current image frame in a video sequence to be transmitted to a receiving terminal;
step 104, if at least one frontal face image exists, segmenting each frontal face image in the at least one frontal face image along a midperpendicular of a double-eye connecting line of the frontal face image, and calculating difference data of one half frontal face image and the other half frontal face image in the segmented frontal face image; and
step 106, encoding either half frontal face image in the frontal face image and the difference data in a first encoding mode to obtain frontal face information, and
transmitting the frontal face information to the receiving terminal.

2. The image encoding method of claim 1, further comprising: encoding the non-frontal face image in the face image in the current image frame and the non-face image in the current image frame in a second encoding mode to obtain secondary information, and transmitting the secondary information to the receiving terminal.

3. The image encoding method of claim 2, further comprising: marking the frontal face information through a first identifier, marking the non-frontal face information and the non-face information through a second identifier, and transmitting the first identifier and the second identifier to the receiving terminal.

4. The image encoding method of any of claims 1-3, further comprising: obtaining size information and position information of the face image in the current image frame, and transmitting the position information and the size information to the receiving terminal.

5. The image encoding method of any of claims 1-3, further comprising: judging whether a face image in a next image frame of the current image frame is moved according to a preset mode, if the face image is moved according to the preset mode, generating a corresponding movement instruction according to the preset mode, and transmitting the movement instruction to the receiving terminal, for enabling the receiving terminal to move the face image in the current image frame of the receiving terminal in the preset mode and use the moved current image frame of the receiving terminal as the next image frame of the receiving terminal.

6. An image decoding method, comprising:
step 202, receiving frontal face information from a sending terminal, wherein the frontal face information contains one half frontal face image of each frontal face image in a face image in a current image frame of the sending terminal and difference data of the one half frontal face image and the other half frontal face image;
step 204, decoding the frontal face information in a first decoding mode to obtain the one half frontal face image in each frontal face image and the difference data; and
step 206, obtaining the other half frontal face image according to the one half frontal face image and the difference data, and obtaining the frontal face image according to the one half frontal face image and the other half frontal face image.

7. The image decoding method of claim 6, further comprising: receiving the non-frontal face information and the non-face information from the sending terminal, and decoding the non-frontal face information and the non-face information in the second decoding mode to obtain a non-frontal face image in the face image of the current image frame and a non-face image in the current image frame.

8. The image decoding method of claim 7, further comprising: determining the frontal face information according to the first identifier from the sending terminal, and determining the non-frontal face information and the non-face information according to the second identifier from the sending terminal.

9. The image decoding method of any of claims 6-8, further comprising: receiving size information and position information of the face image from the sending terminal, and determining the size and the position of the face image in the current image frame according to the size information and the position information.

10. The image decoding method of any of claims 6-8, further comprising: receiving a movement instruction from the sending terminal, moving the face image in the current image frame according to a preset mode corresponding to the movement instruction, and using the moved current image frame as the next image frame of the current image frame.

11. An image encoding and decoding method, comprising the image encoding method of any of claims 1-5 and the image decoding method of any of claims 6-10.

12. A terminal, comprising:
a judging unit, used for judging whether at least one frontal face image exists in a face image of a current image frame in a video sequence to be transmitted to a receiving terminal;
a difference calculating unit, used for, if the judging unit judges that at least one frontal face image exists, segmenting each frontal face image in the at least one frontal face image along a midperpendicular of a double-eye connecting line of the frontal face image, and calculating difference data of one half frontal face image and
the other half frontal face image in the segmented frontal face image;
an encoding unit, used for encoding either half frontal face image in the frontal face image and the difference data in a first encoding mode to obtain frontal face information; and
a transmitting unit, used for transmitting the frontal face information to the receiving terminal.

13. The terminal of claim 12, wherein the encoding unit is further used for encoding the non-frontal face image in the face image in the current image frame and the non-face image in the current image frame in a second encoding mode to obtain secondary information; and the transmitting unit is further used for transmitting the secondary information to the receiving terminal.

14. The terminal of claim 13, further comprising:
a marking unit, used for marking the frontal face information through a first identifier and marking the non-frontal face information and the non-face information through a second identifier,
wherein the transmitting unit is further used for transmitting the first identifier and the second identifier to the receiving terminal.

15. The terminal of any of claims 12-14, further comprising:
an obtaining unit, used for obtaining size information and position information of the face image in the current image frame,
wherein the transmitting unit is further used for transmitting the position information and the size information to the receiving terminal.

16. The terminal of any of claims 12-14, further comprising: an instruction generating unit,
wherein the judging unit is further used for judging whether a face image in a next image frame of the current image frame is moved according to a preset mode; if the judging unit judges that the face image is moved according to the preset mode, the instruction generating unit generates a corresponding movement instruction according to the preset mode; and the transmitting unit is further used for transmitting the movement instruction to the receiving terminal, for enabling the receiving terminal to move the face image in the current image frame of the receiving terminal in the preset mode and use the moved current image frame of the receiving terminal as the next image frame of the receiving terminal.

17. A terminal, comprising:
a receiving unit, used for receiving frontal face information from a sending terminal,
wherein the frontal face information contains one half frontal face image of each frontal face image in a face image in a current image frame of the sending terminal and difference data of the one half frontal face image and the other half frontal face image;
a decoding unit, used for decoding the frontal face information in a first decoding mode to obtain the one half frontal face image in each frontal face image and the difference data; and
an image processing unit, used for obtaining the other half frontal face image according to the one half frontal face image and the difference data, and obtaining the frontal face image according to the one half frontal face image and the other half frontal face image.

18. The terminal of claim 17, wherein the receiving unit is used for receiving non-frontal face information and non-face information from the sending terminal; and the decoding unit is used for decoding the non-frontal face information and the non-face information in a second decoding mode to obtain a non-frontal face image in the face image of the current image frame and a non-face image in the current image frame.

19. The terminal of claim 18, further comprising:
an identifier identifying unit, used for determining the frontal face information according to a first identifier from the sending terminal, and determining the non-frontal face information and the non-face information according to a second identifier from the sending terminal.

20. The terminal of any of claims 17-19, further comprising:
a position determining unit,
wherein the receiving unit is further used for receiving size information and position information of the face image from the sending terminal, and the position determining unit is used for determining the size and the position of the face image in the current image frame according to the size information and the position information.

21. The terminal of any of claims 17-19, further comprising:
an image frame determining unit,
wherein the receiving unit is further used for receiving a movement instruction from the sending terminal, and the image frame determining unit is used for moving the face image in the current image frame according to a preset mode corresponding to the movement instruction, and using the moved current image frame as the next image frame of the current image frame.

22. An image encoding and decoding system, comprising the terminal of any of claims 12-16 and the terminal of any of claims 17-21.
